# EUROPEAN PATENT APPLICATION

(11) **EP 4 529 056 A1**
(43) Date of publication of application: **26.03.2025**
(21) Application number: 22942033.6
(22) Date of filing: 18.05.2022
(51) Int. Cl.: H04L 1/00

(54) **COMMUNICATION METHOD, COMMUNICATION DEVICE, COMPUTER READABLE STORAGE MEDIUM, AND CHIP**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); XU, Weijie, Dongguan, Guangdong 523860 (CN); ZUO, Zhisong, Dongguan, Guangdong 523860 (CN); HE, Chuanfeng, Dongguan, Guangdong 523860 (CN)
(74) Representative: RGTH
(86) International application number: PCT/CN2022/093674
(87) International publication number: WO 2023/220991

(57) **Abstract**

Provided are a communication method, a communication device, a computer readable storage medium, and a chip. The method comprises: a first communication device sends a first signal to a second communication device, wherein the first signal comprises a symbol sequence corresponding to an original bit sequence and a symbol sequence corresponding to a first bit sequence, and the symbol sequence corresponding to the first bit sequence is located before the symbol sequence corresponding to the original bit sequence. In the process of demodulating the first signal, the second communication device (a receiving end) can first process the symbol sequence corresponding to the first bit sequence, so as to obtain a more reliable, accurate, or suitable demodulation parameter. The second communication device can demodulate, according to the demodulation parameter, the symbol sequence corresponding to the original bit sequence, such that first few symbols in the symbol sequence corresponding to the original bit sequence can also be decoded correctly, thereby improving the data transmission performance.

## Description

### TECHNICAL FIELD

This application relates to the field of communications technologies, and more specifically, to a communication method, a communications device, a computer-readable storage medium, and a chip.

### BACKGROUND

During communication, a signal needs to be modulated. For example, during backscatter communication, a modulation scheme such as amplitude-shift keying (amplitude-shift keying, ASK) modulation or on-off keying (on-off keying, OOK) modulation may be used.

For signals generated by using some modulation schemes, when a receive end demodulates the signals, one or more beginning symbols of the signals are prone to decoding errors.

### SUMMARY

This application provides a communication method, a communications device, a computer-readable storage medium, and a chip. This application is described below with reference to the following aspects.

According to a first aspect, a communication method is provided, where the method includes: sending, by a first communications device, a first signal to a second communications device, where the first signal includes a symbol sequence corresponding to an original bit sequence and a symbol sequence corresponding to a first bit sequence, and the symbol sequence corresponding to the first bit sequence is located in front of the symbol sequence corresponding to the original bit sequence.

According to a second aspect, a communication method is provided, where the method includes: receiving, by a second communications device, a first signal sent by a first communications device, where the first signal includes a symbol sequence corresponding to an original bit sequence and a symbol sequence corresponding to a first bit sequence, and the symbol sequence corresponding to the first bit sequence is located in front of the symbol sequence corresponding to the original bit sequence.

According to a third aspect, a communications device is provided, where the communications device is a first communications device, and the communications device includes: a sending unit, configured to send a first signal to a second communications device, where the first signal includes a symbol sequence corresponding to an original bit sequence and a symbol sequence corresponding to a first bit sequence, and the symbol sequence corresponding to the first bit sequence is located in front of the symbol sequence corresponding to the original bit sequence.

According to a fourth aspect, a communications device is provided, where the communications device is a second communications device, and the communications device includes: a receiving unit, configured to receive a first signal sent by a first communications device, where the first signal includes a symbol sequence corresponding to an original bit sequence and a symbol sequence corresponding to a first bit sequence, and the symbol sequence corresponding to the first bit sequence is located in front of the symbol sequence corresponding to the original bit sequence.

According to a fifth aspect, a terminal device is provided, including a processor, a memory, and a communications interface. The memory is configured to store one or more computer programs, and the processor is configured to invoke the computer program in the memory to cause the terminal device to perform the method according to the first aspect and/or the second aspect.

According to a sixth aspect, an embodiment of this application provides a communications system. The system includes the foregoing communications device. In another possible design, the system may further include another device that interacts with the communications device in the solutions provided in embodiments of this application.

According to a seventh aspect, an embodiment of this application provides a computer-readable storage medium. The computer-readable storage medium stores a computer program, and the computer program causes a terminal device to perform some or all of the steps of the method according to the first aspect and/or the second aspect.

According to an eighth aspect, an embodiment of this application provides a computer program product. The computer program product includes a non-transitory computer-readable storage medium storing a computer program, and the computer program is operable to cause a terminal to perform some or all of the steps of the method according to the first aspect and/or the second aspect. In some implementations, the computer program product may be a software installation package.

According to a ninth aspect, an embodiment of this application provides a chip. The chip includes a memory and a processor. The processor may invoke and run a computer program from the memory, to implement some or all of the steps described in the method according to the first aspect and/or the second aspect.

According to a tenth aspect, a computer program product is provided, and includes a program, where the program causes a computer to perform a method according to the first aspect and/or the second aspect.

According to an eleventh aspect, a computer program is provided, where the computer program causes a computer to perform a method according to the first aspect and/or the second aspect.

During demodulation of the first signal, the second communications device may process the symbol sequence corresponding to the first bit sequence received first, to obtain a more reliable, accurate, or appropriate demodulation parameter. The second communications device may demodulate, based on the demodulation parameter, the symbol sequence corresponding to the original bit sequence, so that several beginning symbols in the symbol sequence corresponding to the original bit sequence may also be correctly decoded, thereby improving data transmission performance.

### BRIEF DESCRIPTION OF DRAWINGS

FIG. 1 is a schematic architectural diagram of a wireless communications system to which embodiments of this application are applied.
FIG. 2 shows a possible structure of a power harvesting module.
FIG. 3 shows a backscatter communication principle according to an embodiment of this application.
FIG. 4 is a circuit diagram of a terminal based on a resistive load modulation technology.
FIG. 5 is a schematic diagram of a coding scheme of NRZ encoding.
FIG. 6 is a schematic diagram of a coding scheme of unipolar return-to-zero encoding.
FIG. 7 is a schematic diagram of a coding scheme of Manchester encoding.
FIG. 8 is a schematic diagram of a coding scheme of Miller encoding.
FIG. 9 is a schematic diagram of a coding scheme of DBP encoding.
FIG. 10 is a schematic diagram of a coding scheme of differential encoding.
FIG. 11 is a schematic diagram of a coding scheme of PIE.
FIG. 12 is an example diagram of a rule of FM0 encoding.
FIG. 13 is an example diagram of an FM0 symbol, an FM0 symbol sequence, and encoding.
FIG. 14 is an example diagram of a receive end demodulating a signal sent by a transmit end.
FIG. 15 is a schematic flowchart of a communication method according to an embodiment of this application.
FIG. 16 is a schematic flowchart of a communication method according to Embodiment 1 of this application.
FIG. 17 is a schematic flowchart of a communication method according to Embodiment 2 of this application.
FIG. 18 is a schematic flowchart of a communication method according to Embodiment 3 of this application.
FIG. 19 is a schematic flowchart of a communication method according to Embodiment 4 of this application.
FIG. 20 is a schematic flowchart of another communication method according to an embodiment of this application.
FIG. 21 is a schematic flowchart of another communication method according to an embodiment of this application.
FIG. 22 is a schematic structural diagram of a communications device according to an embodiment of this application.
FIG. 23 is a schematic structural diagram of another communications device according to an embodiment of this application.
FIG. 24 is a schematic structural diagram of an apparatus according to an embodiment of this application.

### DESCRIPTION OF EMBODIMENTS

Technical solutions in this application are described below with reference to the accompanying drawings.

With the development of wireless communications technologies, it is expected to integrate a wireless communications system with various vertical industries such as logistics, manufacturing, transportation, and energy. For example, the wireless communications system may be integrated with an industrial wireless sensor network (industrial wireless sensor network, IWSN). For another example, the wireless communications system may be integrated with smart logistics and smart warehousing. For another example, the wireless communications system may be integrated with a smart home network.

However, in these industries, a terminal usually needs to have features such as a relatively low cost, a relatively small size (for example, being ultra-thin), being maintenance-free, and a long life. Therefore, to meet the foregoing conditions, communication between a network device and a terminal may adopt a zero-power communications technology. In this case, the terminal may alternatively be referred to as a "zero-power communications terminal". For example, a radio frequency identification (radio frequency identification, RFID) technology is a typical zero-power communications technology. The RFID technology is a technology that implements contactless and automatic transmission and identification of tag information in a manner of spatial coupling of radio frequency signals.

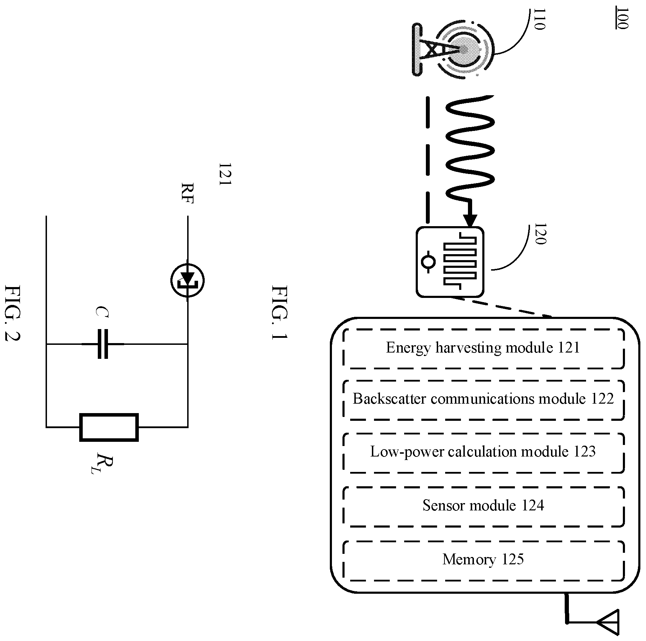

The zero-power communications technology and a zero-power terminal are described below with reference to FIG. 1 to FIG. 4. FIG. 1 is a schematic architectural diagram of a zero-power communications system 100 to which embodiments of this application are applicable. An architecture shown in FIG. 1 includes communications devices such as a network device 110 and a terminal 120. The network device 110 may be a device in communication with the terminal device 120. The network device 110 may provide communication coverage for a specific geographic area, and may communicate with the terminal device 120 located within the coverage.

The network device 110 is configured to send a wireless power supply signal to the terminal 120 to supply power to the terminal. Accordingly, the terminal 120 may send data to the network device 110 or another communications device through a backscatter signal. In some implementations, the foregoing wireless power supply signal may further carry data or control information sent by the network device 110 to the terminal 120. Certainly, the foregoing wireless power supply signal may be used only for power supply. This is not limited in embodiments of this application.

It should be noted that FIG. 1 shows an example of one network device and one terminal. Optionally, the communications system 100 may include a plurality of network devices, and another quantity of terminal devices may be included within coverage of each network device. This is not limited in embodiments of this application.

It should be understood that the technical solutions of embodiments of this application may be applied to various communications systems, such as a 5th generation (5th generation, 5G) system or new radio (new radio, NR), a long term evolution (long term evolution, LTE) system, an LTE frequency division duplex (frequency division duplex, FDD) system, LTE time division duplex (time division duplex, TDD), a cellular Internet of Things, and a WIFI communications system. The technical solutions provided in this application may be further applied to a future communications system, for example, a 6th generation mobile communications system.

The terminal in embodiments of this application may alternatively be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device that provides voice and/or data connectivity for a user, and may be configured to connect a person, an object, and a machine, such as a household appliance with a wireless connection function, a sensor, and an electronic tag (tag). The electronic tag may alternatively be referred to as a "radio frequency tag". In a radio frequency identification (radio frequency identification, RFID) technology, the electronic tag may alternatively be referred to as an "RFID tag". The terminal in embodiments of this application may be a wireless terminal in a smart home (smart home), a wireless terminal in an IWSN, a wireless terminal in smart logistics and smart warehousing, a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or the like.

The network device in embodiments of this application may be a device configured to communicate with the terminal device. If the terminal is an electronic tag, the network device may be a reader/writer (reader/writer) for reading/writing the electronic tag. For example, the reader/writer may be based on the RFID technology. The network device may alternatively be an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks with a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or in-vehicle, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

The RFID technology is used as an example, the terminal may be an electronic tag, and the network device may be a reader/writer. The electronic tag may include a coupling component and a chip. Each electronic tag may have a unique electronic code. The electronic tag may be placed on a target under test, to mark the target object. The reader/writer not only may read information on the electronic tag, but also may write the information on the electronic tag. The reader/writer may further provide the electronic tag with power required for communication. After entering an electromagnetic field, the electronic tag may receive a radio frequency signal transmitted by the reader/writer. The electronic tag may transmit, by using power obtained through an electromagnetic field generated in space, information stored in the electronic tag. The reader/writer may read and decode the information to identify the electronic tag.

As shown in FIG. 1, the terminal 120 may include an power harvesting module 121 and a backscatter communications module 122. The power harvesting module 121 and the backscatter communications module 122 are described below with reference to FIG. 2 to FIG. 4. For brevity, details are not described herein again. In some cases, the terminal 120 may further include a low-power calculation module 123. The low-power calculation module 123 is configured to provide a computing function for the terminal, for example, data processing. In some other cases, the terminal 120 may further include a sensor 124 configured to collect external information (for example, an ambient temperature and ambient humidity). In some other cases, the terminal 120 may further include a memory 125 configured to store some information (such as external information collected by using the foregoing sensor or an object identifier).

The power harvesting module 121 may be configured to perform power harvesting (power harvesting). For example, harvested power may include various forms of energy such as radio waves, solar energy, optical energy, thermal energy, and mechanical energy. The power harvested by the power harvesting module 121 may be used to drive a device to work, thereby implementing a battery-free operation. In some implementations, the power may be harvested from a wireless power supply signal sent by the network device. The wireless power supply signal may be a radio frequency (radio frequency, RF) signal sent by the network device. Therefore, the power harvesting module may alternatively be referred to as a "radio frequency power harvesting module" ("RF module" for short).

FIG. 2 shows a possible structure of an power harvesting module. As shown in FIG. 2, the power harvesting module may harvest power of spatial electromagnetic waves through electromagnetic induction, thereby driving a load circuit (including a low-power operation, a sensor, and the like). The power harvesting module shown in FIG. 2 may be an RF module. For example, the power harvesting module 121 may store the harvested power in a capacitor C, which is a process of charging the capacitor C. After the process of charging the capacitor C is ended, the capacitor C may start to discharge, to supply power to the terminal for working.

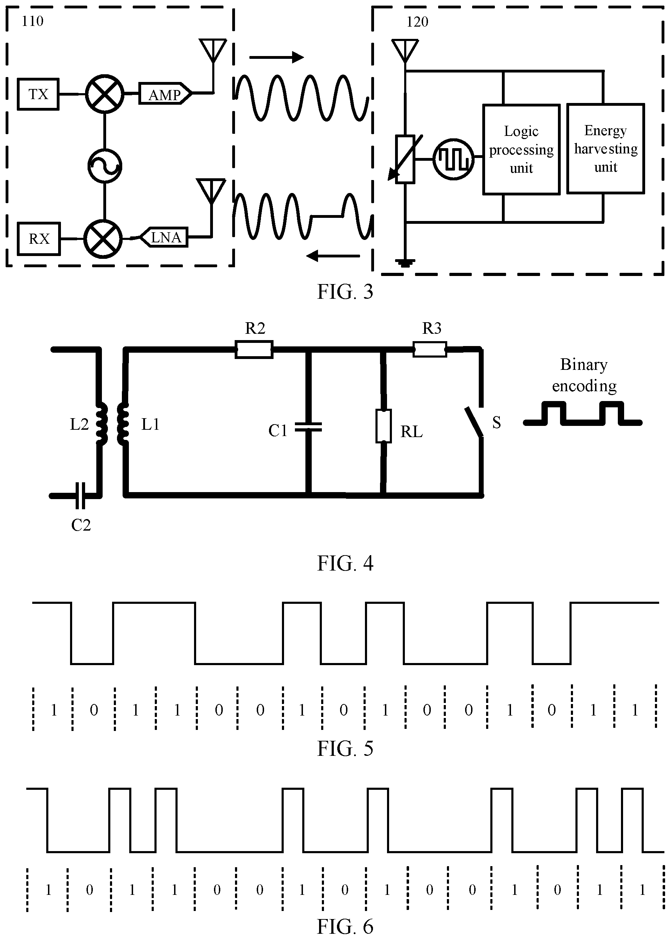

The foregoing backscatter communications module 122 may be configured to perform backscatter (back scattering) communication with the network device by the terminal. A backscatter communication principle according to an embodiment of this application is described below with reference to FIG. 3. Referring to FIG. 3, the terminal 120 receives a radio signal (for example, a carrier) transmitted by the network device 110, and modulates the radio signal, to load data that needs to be transmitted. Finally, a modulated signal is radiated from an antenna. This information transmission process is referred to as backscatter communication.

In some implementations, another component may be further disposed on a transport (transport, TX) path of the network device 110, and is configured to process a to-be-sent signal, for example, an amplifier (amplifier, AMP). Another component may be further disposed on a receive (receive, RX) path of the network device 110, and is configured to process a received signal, for example, a low noise amplifier (low noise amplifier, LNA).

In some implementations, the power harvesting unit may be disposed on the terminal 120, and is configured to harvest power from a wireless power supply signal sent by the network device. A low-power processing module (for example, a logic processing unit shown in FIG. 3) may be further disposed on the terminal 120, to perform a corresponding computing function.

It may be understood that in backscatter communication, the terminal 120 may not actively transmit a signal, that is, backscatter communication may be implemented by modulating an incoming wave. Secondly, the terminal 120 may not rely on an active power amplifier transmitter in the related art, and use a low-power computing unit, thereby greatly reducing hardware complexity. In addition, in backscatter communication, the terminal 120 may achieve battery-free communication by power harvesting.

It should be noted that, for both the network device 110 and the terminal 120, FIG. 3 shows only examples of connection structures of signal processing circuits thereof, and processing circuits of the network device 110 and/or the terminal 120 may include other elements. This is not specifically limited in this embodiment of this application.

Backscatter communication and a load modulation function are inseparable. Load modulation is a method often used by the terminal to transmit data to the network device. The load modulation function may be understood as that a circuit parameter of an oscillation loop of the terminal is adjusted and controlled based on a beat of a data stream, such that parameters such as magnitude of impedance of the terminal and a phase change accordingly, thereby completing a modulation process.

A load modulation function may be implemented in two manners: resistive load modulation and capacitive load modulation. FIG. 4 is a circuit diagram of a terminal based on a resistive load modulation technology. It should be noted that an implementation of a circuit described in FIG. 4 that implements a load modulation technology is similar to an existing implementation of a circuit that implements a load modulation technology. For brevity, details of functions of a resistor R2, a load RL, capacitors C1 and C2, and inductors L1 and L2 included in FIG. 4 are not described.

During the resistive load modulation, a resistor R3 may be connected in parallel to a load. A switch S may control on/off of the resistor R3 under control of a binary data stream. In this case, the on/off of the resistor R3 causes a change in a circuit voltage, and the change in the circuit voltage may control an amplitude of a backscatter signal of the terminal, thereby modulating the backscatter signal. For example, ASK modulation may be performed on the backscatter signal.

Similarly, during the capacitive load modulation, a capacitor may be connected in parallel to the load, and on/off of the capacitor may be controlled based on a binary data stream, to change a resonance frequency of a circuit, thereby changing an operating frequency of the backscatter signal. In this case, frequency-shift keying (frequency-shift keying, FSK) modulation is implemented.

As described above, the terminal may perform information modulation on a received signal (that is, a signal sent by the network device) through load modulation, to implement a backscatter communication process. Therefore, a terminal in backscatter communication generally has the following advantages.

Advantage 1: Since the terminal does not need to actively transmit a signal, the terminal does not need a complex radio frequency path to be constructed. For example, a component such as a power amplifier (power amplifier, PA) or a radio frequency filter may not be disposed on the radio frequency path, which reduces costs and a volume of the terminal.

Advantage 2: Since the terminal does not need to actively generate a high-frequency signal, there is no need for a high-frequency crystal oscillator, which reduces costs and a volume of the terminal.

Advantage 3: Since the terminal may communicate with the network device by using a backscatter technology, less power is consumed by the terminal during communication, or even no power of the terminal is consumed.

The communication process and the load modulation scheme in the zero-power communication technology are described above with reference to FIG. 1 to FIG. 4. An encoding scheme in the zero-power communication technology is described below with reference to FIG. 5 to FIG. 9.

In data transmitted by an encoding end (for example, a terminal or an electronic tag), "1" and "0" in the binary system may be represented by using different coding schemes. Correspondingly, a decoding end (for example, a network device or a radio frequency identification system) may decode, by using a corresponding decoding scheme, a bit stream sent by the encoding end. A coding scheme commonly used in the zero-power communication technology includes: non-return-to-zero (non return zero, NRZ) inverted encoding, Manchester (manchester) encoding, unipolar return-to-zero (unipolar RZ) encoding, differential bi-phase (differential binary phase, DBP) encoding, Miller (miller) encoding, differential encoding, pulse interval encoding (pulse interval encoding, PIE), bi-phase space coding (bi-phase space coding, FM0), and the like.

FIG. 5 is a schematic diagram of a coding scheme of the NRZ encoding. It may be seen in FIG. 5 that, in the NRZ encoding, a high level is used to represent binary bit "1" and a low level is used to represent binary bit "0". It may be understood that a waveform of such a coding scheme has no gap between code elements, that is, by using this coding scheme, codes may be transmitted during an entire code element time.

FIG. 6 is a schematic diagram of a coding scheme of the unipolar return-to-zero encoding. As shown in FIG. 6, in the unipolar return-to-zero encoding, a high level in a first half of a bit period represents binary bit "1", and a low level signal that lasts an entire bit period represents binary bit "0". In some implementations, the unipolar return-to-zero encoding can be used to extract a bit synchronization signal.

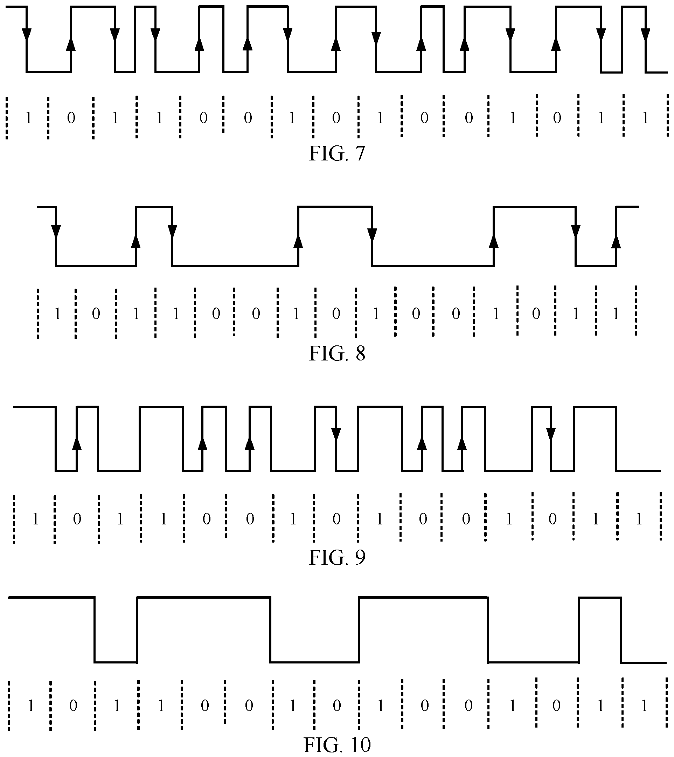

FIG. 7 is a schematic diagram of a coding scheme of the Manchester encoding. The Manchester encoding is alternatively referred to as split-phase coding (split-phase coding) or bi-phase coding. In the Manchester encoding, a difference between phases of voltage jumps is used to distinguish between 1 and 0. A jump from high to low represents 1, and a jump from low to high represents 0.

FIG. 8 is a schematic diagram of a coding scheme of the Miller encoding. The Miller encoding is modified Manchester encoding. The Miller encoding represents binary bit "1" by any edge at half a bit period, and represents binary bit "0" by an unchanged level that lasts till an end of a next bit period. That is, the Miller coding represents data "1" through existence of level switching at a bit center point, and represents data "0" through non-existence of level switching at a bit center point. In addition, when continuous binary bits "0" occur, level switching occurs at a bit ending moment. With the Miller coding, level switching occurs at the beginning of a bit period, so that a bit beat is relatively easily reconstructed for a receiver.

FIG. 9 is a schematic diagram of a coding scheme of the DBP encoding. The DBP encoding represents binary bit "0" by any edge at half a bit period, and represents binary bit "1" by no edge. In addition, level switching occurs at the beginning of each bit period.

FIG. 10 is a schematic diagram of a coding scheme of the differential encoding. For the differential encoding, each binary bit "1" to be transmitted causes a change in a signal level. However, for binary bit "0", a signal level remains unchanged.

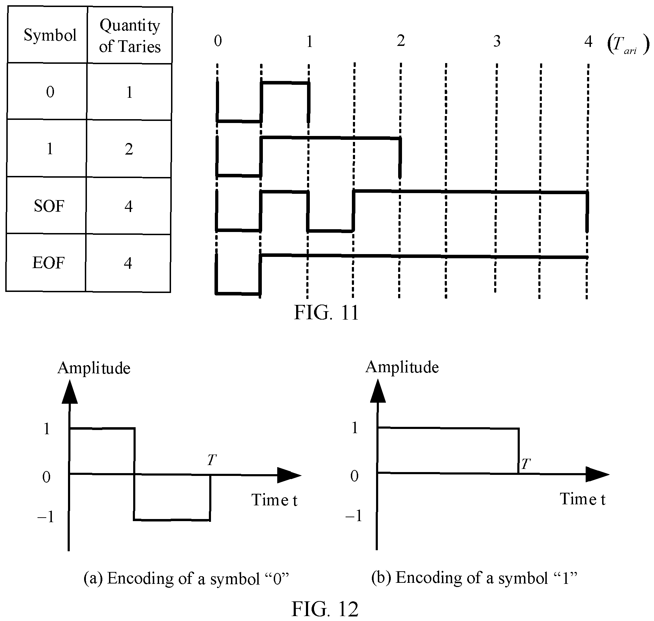

FIG. 11 is a schematic diagram of a coding scheme of the PIE. PIE encoding may be used as a coding scheme for a reader/writer to transmit data to an electronic tag. The PIE encoding is a coding scheme in which "0" and "1" have different time intervals. The PIE encoding may be based on a continuous fixed-period pulse, and "0" and "1" occupy different numbers of periods of the pulse. A continuous interval of each binary code may be an integral multiple of a clock cycle. The PIE may include four encoding symbols, namely data 0, data 1, a start of frame (start of frame, SOF), and an end of frame (end of frame, EOF), which are respectively 1, 2, 4 and 4 times a time interval (the time interval may be referred to as Tari, for example). FIG. 11 shows an example of definitions of the data 0, the data 1, the SOF, and the EOF. As may be seen from FIG. 11, the PIE encoding may easily define a case other than the data 0 and the data 1. To determine a type of a transmitted symbol, a receive end may measure an interval of a high/low pulse between switching as shown in the figure.

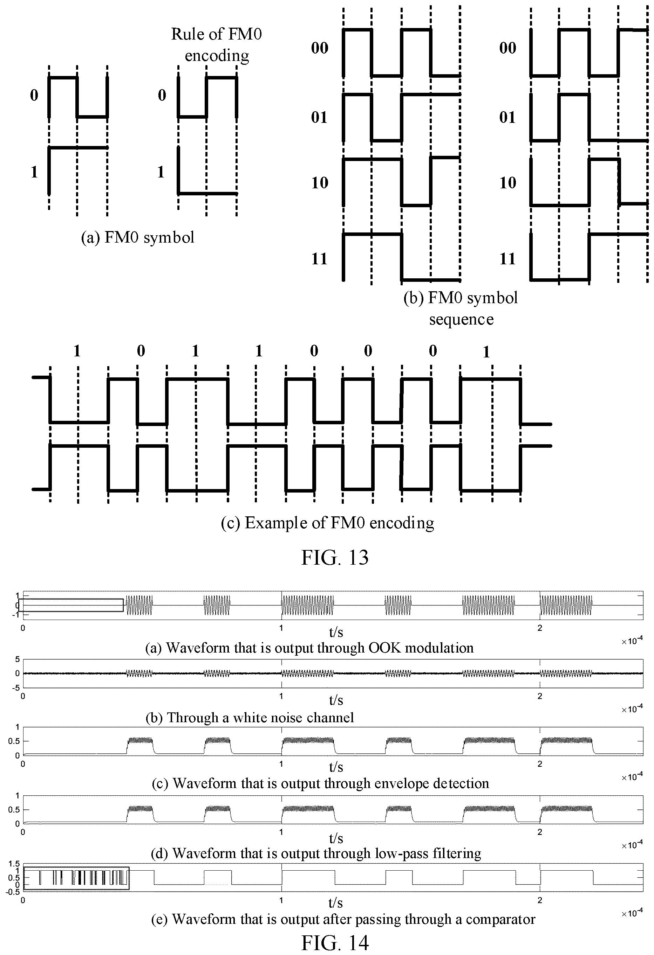

FM0 may be used as a coding scheme for an electronic tag to transmit data to a reader/writer. Rules of the FM0 encoding may be: a symbol "0" represents that a level change occurs both in a middle and at an edge of a time; and symbol "1" represents that a level change occurs only at an edge of a time. FIG. 12 is an example diagram of a rule of the FM0 encoding. As may be seen from FIG. 12, a symbol "0" has three changes, including a change at a start position of a bit time and a change at a middle position of the bit time; and a symbol "1" has one change at a start position of a bit time. FIG. 13 is an example diagram of an FM0 symbol, an FM0 symbol sequence, and encoding.

Based on the foregoing descriptions of the zero-power communication technology, it may be learned that a terminal (alternatively referred to as a "zero-power terminal") consumes little power of the terminal for zero-power communication, or may even consume no power of the terminal. Therefore, in the zero-power communication technology, based on power sources and power use manners of terminals, the terminals may be classified into three types: a passive zero-power terminal, a semi-passive zero-power terminal, and an active zero-power terminal.

### 1. Passive zero-power terminal

The passive zero-power terminal generally does not need a built-in battery. When the terminal approaches the network device, the terminal falls within a near-field range formed by radiation of an antenna of the network device. In this case, an antenna of the terminal may generate an induced current through electromagnetic induction. The induced current may supply power to the terminal, to demodulate a received signal, modulate and encode a to-be-transmitted signal, and/or the like.

In an implementation, the passive zero-power terminal may be an electronic tag (that is, a passive electronic tag). Accordingly, the network device may be a reader/writer of the electronic tag, which is configured to: read content in the electronic tag and/or change the content in the electronic tag. When the passive electronic tag approaches the reader/writer, the electronic tag may fall within a near field formed through radiation of an antenna of the reader/writer, an antenna of the electronic tag may generate an induced current through electromagnetic induction, and the induced current may drive a chip circuit of the electronic tag. The chip circuit sends identity information stored in the tag to the reader/writer by using the antenna of the electronic tag.

It may be understood that the passive zero-power terminal does not need a built-in battery to drive a forward link or a reverse link, and is a zero-power terminal in a true sense.

### 2. Semi-passive zero-power terminal

No conventional battery is installed in the semi-passive zero-power terminal, but power of radio waves may be harvested by using the power harvesting module 121, and the harvested power may be stored in a power storage unit (for example, a capacitor). After obtaining the power, the power storage unit may supply power to the terminal, to demodulate a received signal, to modulate and encode a to-be-transmitted signal, and/or the like. The semi-passive zero-power terminal inherits advantages of a passive zero-power device, such as a small volume, a light weight, a low price, and a long service life.

In an implementation, the semi-passive zero-power device may be an electronic tag (in other words, a semi-active electronic tag). Accordingly, the network device may be a reader/writer of the electronic tag. A built-in battery of the semi-active electronic tag may provide power only for a small quantity of circuits in the chip when no reader/writer is accessing the semi-active electronic tag. When the reader/writer is accessing the semi-active electronic tag, the built-in battery may supply power to a chip (for example, an RFID chip), to increase a reading/writing distance of the electronic tag and improve communication reliability.

It may be understood that the semi-passive zero-power terminal does not need the built-in battery to drive a forward link or a reverse link. Although power stored in a capacitor is used during operation, the power comes from radio power harvested by the power harvesting module. Therefore, the semi-passive zero-power terminal is also a zero-power terminal in a true sense.

### 3. Active zero-power terminal

A battery may be built in the active zero-power terminal. The battery may be configured to drive a low-power chip circuit of the zero-power terminal, to demodulate a signal on a forward link and modulate a signal on a backward link. For a backscatter link, the zero-power terminal transmits a signal in a backscatter manner. Therefore, being zero-power of this type of terminal mainly refers to that signal transmission in a reverse link does not need power of the terminal, but is in a backscatter manner.

Supplying power by using the built-in battery may increase a communication distance of the zero-power terminal and improve communication reliability. Therefore, in some scenarios with relatively high requirements on a communication distance, a reading delay, and the like, zero-power devices (including the active zero-power terminal and the semi-passive zero-power terminal) with built-in batteries can be applied.

In some implementations, the foregoing active zero-power terminal may be an electronic tag (that is, an active electronic tag), and the network device may be a reader/writer. In this case, power for the electronic tag to work may be provided by the battery. The battery, memory, and antenna may together constitute the active electronic tag. Different from a passive radio frequency activation manner, before the battery is replaced, the active electronic tag may always transmit information by using a specified frequency band.

A transmit end may perform logic processing and perform modulation on an original bit sequence by using the modulation scheme described above, to generate a corresponding symbol sequence, and transmit the symbol sequence to a receive end. The receive end demodulates the received symbol sequence by using the corresponding modulation scheme, and then restores, through the logic processing corresponding to the transmit end, the original bit sequence sent by the transmit end. For example, when backscatter communication is performed, some relatively simple modulation schemes (such as ASK modulation, FSK modulation, or OOK modulation) may be used.

In some cases, demodulation of the receive end may include envelope detection when the foregoing relatively simple modulation scheme is used for communication. The receive end may pass, through a comparator, a signal obtained by envelope detection, to determine a level corresponding to the signal, and then perform logic processing such as decoding, to obtain data of the transmit end.

The comparator may determine, based on a threshold (or referred to as a decision threshold) of the comparator, the level corresponding to the signal. For example, the comparator may compare the signal with the threshold to determine the level. A method for determining the threshold of the comparator may be, for example, using an average input of envelope detection before a time N as the threshold. The comparator may determine a level at the time N based on the threshold. N may be a value greater than 0.

When the signal passes through the comparator, for one or more symbols at the beginning, since a relatively small quantity of symbols are entered into the comparator, the threshold of the comparator may be unstable, thereby leading to a level determining error, and further a decoding error. The case is described below by using FIG. 14 as an example.

FIG. 14 is an example diagram of a receive end demodulating a signal sent by a transmit end. The transmit end may modulate, by using an OOK modulation scheme, a bit sequence [000010010011001001101100] obtained by NRZ encoding, to generate a symbol sequence. Demodulation processing performed by the receive end may include one or more of the following processing: performing envelope detection on a signal that passes through a channel (in FIG. 14, a white noise channel is used as an example), performing low-pass filtering, and processing through a comparator.

FIG. 14 (a) shows an example diagram of a waveform that is output through OOK modulation and that is received by a receive end. A waveform in FIG. 14(a) obtained after being processed through a channel (a white noise channel is used as an example) may be as shown in FIG. 14(b). A waveform that is output through envelope detection may be as shown in FIG. 14(c). A waveform that is output through low-pass filtering may be as shown in FIG. 14(d). A waveform that is output by passing through a comparator may be as shown in FIG. 14(e).

As can be seen from FIG. 14, for several symbols at the beginning, a difference between a waveform (outlined by using a block) that is output by the comparator and a waveform that is output through OOK modulation is relatively large, that is, a decoding error occurs.

It can be learned that, for signals generated by using some modulation schemes (for example, ASK modulation), when the receive end demodulates the signals, one or more beginning symbols of the signals are prone to decoding errors.

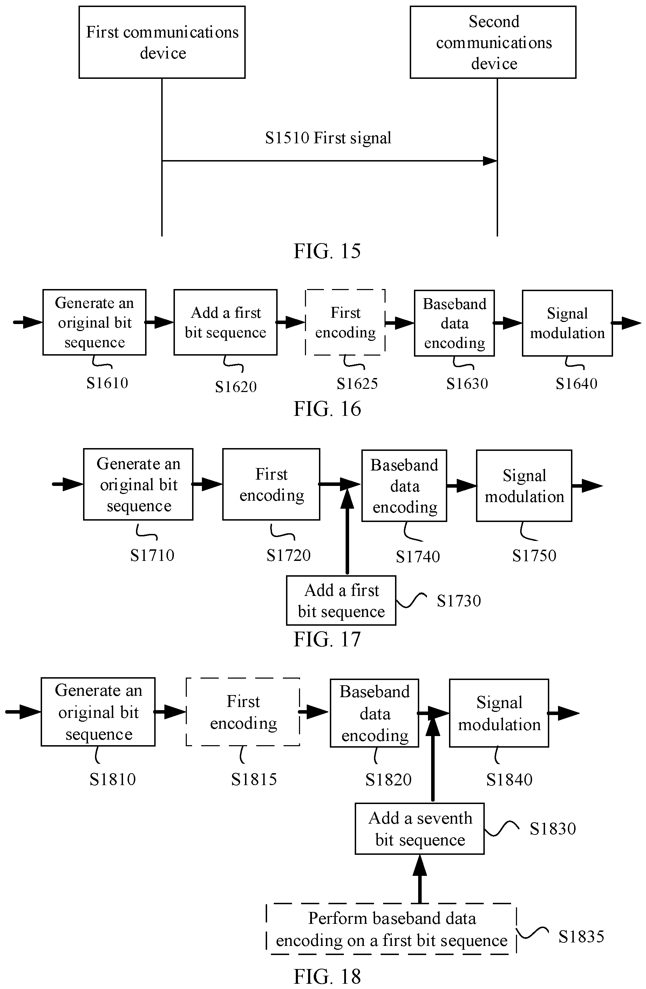

FIG. 15 is a schematic flowchart of a communication method according to an embodiment of this application, which is provided to resolve the foregoing problem. The method shown in FIG. 15 may be performed by a first communications device and a second communications device. The first communications device may be a transmit end communications device, and the second communications device may be a receive end communications device. The first communications device may be the network device or terminal described above. The second communications device may be a terminal or a network device that communicates with the first communications device. The method in FIG. 15 may include Step S1510.

Step S1510: The first communications device may send a first signal to the second communications device. Accordingly, the second communications device may receive the first signal sent by the first communications device.

In some embodiments, the first signal may be a signal used for backscatter communication. In some embodiments, the first signal may be a signal used for zero-power communication or ultra-low-power communication. It may be understood that the first communications device and/or the second communications device may be zero-power communications devices.

The first signal may be a signal generated through modulation. For example, the first signal may be generated through ACK modulation or OOK modulation. ASK may be, for example, double-sideband amplitude shift keying (double-sideband amplitude shift keying, DSB-ASK), single-sideband amplitude shift keying (single-sideband amplitude shift keying, SSB-ASK), or phase-reversal amplitude shift keying (phase-reversal amplitude shift keying, PR-ASK). OOK may be a relatively simple ASK modulation scheme.

The first signal may include a symbol sequence corresponding to an original bit sequence and a symbol sequence corresponding to a first bit sequence. In some embodiments, the symbol sequence may alternatively be referred to as a modulation symbol sequence, for example, a modulation symbol sequence corresponding to the original bit sequence or a modulation symbol sequence corresponding to the first bit sequence.

The original bit sequence may be generated based on data to be sent by the first communications device.

The first bit sequence may include one or more additional bits. The additional bit may not be a bit in the original bit sequence. That is, the additional bit may be a bit other than the original bit sequence. In an implementation, one or more additional bits may be added to form the first bit sequence. In another implementation, some data information to be sent by the first communications device may be punctured, to obtain the first bit sequence. For example, a plurality of beginning bits of the original bit sequence may be punctured. The punctured bits may be used as additional bits, that is, the plurality of punctured bits may not be used to transmit data information. In another implementation, the first bit sequence may be formed by some bits selected from the original bit sequence based on a preset rule. For example, N consecutive bits are selected from a start position of the original bit sequence to form the first bit sequence, or from a start position of the original bit sequence, a bit is selected every M bits from the original bit sequence, to obtain N bits in total to form the first bit sequence. M may be an integer greater than 0, and N may be an integer greater than 0.

The symbol sequence corresponding to the original bit sequence may be obtained by performing one or more processing on the original bit sequence. The processing may include first encoding, baseband data encoding, modulation, and the like. In a process of performing one or more processing on the original bit sequence, the original bit sequence may be combined with another bit sequence for processing. The another bit sequence may be, for example, the first bit sequence. That is, the original bit sequence may be combined with the first bit sequence for processing.

The symbol sequence corresponding to the first bit sequence may be obtained by performing one or more processing on the first bit sequence. The processing may include one or more of baseband data encoding, first encoding, modulation, and the like. In a process of performing one or more processing on the first bit sequence, the first bit sequence may be combined with another bit sequence for processing. The another bit sequence may be, for example, the original bit sequence. That is, the first bit sequence may be combined with the original bit sequence for processing.

The baseband data encoding may be performed for transmitting baseband data. The baseband data encoding may represent binary 1 and binary 0 by using different forms of codes. That is, the baseband data encoding may represent 0 and 1 by using different pulse signals. For example, the baseband data encoding may include one or more of the following coding schemes: non-return-to-zero inverted encoding, Manchester encoding, unipolar return-to-zero encoding, differential bi-phase encoding, Miller encoding, differential encoding, pulse interval encoding, or the like.

A baseband data encoding process performed on the first bit sequence may be the same as or different from a baseband data encoding process performed on the original bit sequence. It should be noted that different baseband data encoding processes may refer to: different coding schemes, or a same coding scheme but different coding parameters. For example, both the first bit sequence and the original bit sequence may be processed by the Manchester encoding. Alternatively, the first bit sequence is processed by the NRZ encoding, and the original bit sequence is processed by the Manchester encoding or the PIE encoding.

In the case that the baseband data encoding process performed on the first bit sequence is different from the baseband data encoding process performed on the original bit sequence, proper baseband data encoding processes may be separately selected for the original bit sequence and the first bit sequence, to achieve more accurate and reliable transmission. For example, because the first bit sequence does not include valid data, a less complex baseband data encoding process may be selected for the first bit sequence. However, for the original bit sequence, a more complex baseband data encoding process with relatively high transmission accuracy may be selected, to achieve accurate transmission of the original bit sequence.

The first encoding may include redundant data encoding and/or cyclic redundancy check (cyclic redundancy check, CRC) encoding.

The redundant data encoding may be redundancy encoding performed to improve data transmission reliability or anti-interference. The redundant data encoding may include, for example, one or more of the following coding schemes: a linear code, Hamming codes, a cyclic code, BCH codes, algebraic geometric codes, a low-density parity-check code (low density parity check code, LDPC), or a polar (polar) code. After the redundancy data encoding, a length of a bit sequence may or may not be changed. For example, after the redundant data encoding is performed on a bit sequence whose original length is M, a new bit sequence may be obtained. The new bit sequence is different from the bit sequence whose original length is M. A length of the new bit sequence may or may not be M. M may be an integer greater than 0.

The CRC encoding may be performed to detect an error in data by adding a CRC or adding a CRC check code after the data. It may be understood that based on the CRC encoding, a receive end may check whether the data is correct. Based on a CRC check result, incorrectly transmitted data may be retransmitted, so that a receiver obtains correct data.

In an actual data transmission process, the first encoding may or may not be performed. For example, only one of the redundant data encoding and the CRC encoding may be performed. Alternatively, both the redundant data encoding and the CRC encoding may be performed.

A sequence of different encoding in the first encoding is not limited in this application. For example, the redundant data encoding may be performed first, and then the CRC encoding is performed. Alternatively, the CRC encoding may be performed first, and then the redundant data encoding is performed.

For the first bit sequence and the original bit sequence, a same first encoding process may be implemented, or different first encoding processes may be implemented. It should be noted that cases of different first encoding processes may include: different coding schemes, a same coding scheme but different coding parameters, or whether to perform the first encoding is different.

It should be noted that a modulation process corresponding to the symbol sequence corresponding to the original bit sequence may be the sane as or different from a modulation process corresponding to the symbol sequence corresponding to the first bit sequence. Cases of different modulation processes may include: different modulation schemes, or a same modulation scheme but different modulation parameters.

The symbol sequence corresponding to the first bit sequence may be located in front of the symbol sequence corresponding to the original bit sequence. For example, the symbol sequence corresponding to the first bit sequence may be located at the beginning (that is, a header) of the first signal. When receiving the first signal, the second communications device may first receive the symbol sequence corresponding to the first bit sequence, and then receive the symbol sequence corresponding to the original bit sequence.

Because the symbol sequence corresponding to the first bit sequence may be located in front of the symbol sequence corresponding to the original bit sequence, the second communications device may first receive the symbol sequence corresponding to the first bit sequence. During demodulation of the first signal, the second communications device may process the symbol sequence corresponding to the first bit sequence, to obtain a more reliable, accurate, or appropriate demodulation parameter. The second communications device may demodulate, based on the demodulation parameter, the symbol sequence corresponding to the original bit sequence, so that several beginning symbols in the symbol sequence corresponding to the original bit sequence may also be correctly decoded, thereby improving data transmission performance.

In an example of demodulating the first signal by using a comparator, a threshold of the comparator may be determined based on the symbol sequence corresponding to the first bit sequence. It may be understood that the threshold of the comparator may be determined based on a symbol (for example, some or all of symbols in the symbol sequence corresponding to the first bit sequence may be included) in front of a symbol in the symbol sequence corresponding to the original bit sequence. For example, for first A symbols (A may be an integer greater than 0) in the symbol sequence corresponding to the original bit sequence, the threshold of the comparator may be determined based on some or all of the symbols in the symbol sequence corresponding to the first bit sequence. For a B^{th} symbol (B may be an integer greater than or equal to 0) in the symbol sequence corresponding to the original bit sequence, the threshold of the comparator may be determined based on some of the symbols in the symbol sequence corresponding to the first bit sequence and/or some of symbols in the symbol sequence corresponding to the original bit sequence. That is, the symbol sequence corresponding to the first bit sequence may expand the symbols used to determine the threshold of the comparator. In other words, the symbol sequence corresponding to the first bit sequence may be used to assist in determining the threshold of the comparator. For example, an average of inputs from envelope detection before a time N may be used as a threshold, to determine a level at the time N. It may be understood that the input from the envelope detection before the time N may include the symbol sequence corresponding to the first bit sequence. It may be learned that when the symbol sequence corresponding to the original bit sequence is processed, a more reliable, accurate, and stable threshold of the comparator may be obtained. Based on this, the second communications device may correctly decode even the first few symbols in the symbol sequence corresponding to the original bit sequence.

As can be learned from the above, the first bit sequence may be used to calibrate demodulation to implement correct decoding. Therefore, in some embodiments, the first bit sequence may alternatively be referred to as a calibration bit sequence or an additional calibration bit sequence.

It may be understood that the first bit sequence may be further used to perform another operation. In some embodiments, the first bit sequence may be further used to perform or assist one or more of the following operations: synchronization processing, identification of the first communications device and/or the second communications device, or access control. The synchronization processing may be, for example, timing synchronization. The identification of the first communications device may be, for example, terminal identification or user identification. In some embodiments, the first bit sequence may be used as a preamble (preamble), to implement some or all of functions of the preamble.

The first bit sequence may include one or more bits, and the one or more bits may be at least one of the following: one or more bits 0 or one or more bits 1. In some embodiments, the first bit sequence may include only one or more bits 0. In some embodiments, the first bit sequence may include only one or more bits 1. In some embodiments, the first bit sequence may include both one or more bits 0 and one or more bits 1.

When the first bit sequence includes both bit 0 and bit 1, the symbol sequence corresponding to the first bit sequence may include both a high level and a low level. Based on the high level and the low level, the second communications device may enable the comparator to obtain a suitable threshold.

It may be understood that the first bit sequence may include only bit 0 or only bit 1. In this case, the first bit sequence may be processed (for example, by baseband data encoding and/or modulation) such that the first bit sequence includes both a high level and a low level. The processing may result in bit 1 including both a high level and a low level, or result in bit 0 including both a high level and a low level.

A manner of determining the first bit sequence is not limited in this application. For example, the first bit sequence may be determined based on one of the following information: a preset rule, indication information from the second communications device or the first communications device, a protocol pre-definition, or the original bit sequence.

In an implementation, the first bit sequence may be determined based on indication information from a network device. The first communications device being the network device is used as an example, and the first bit sequence may be determined based on the indication information from the first communications device. Alternatively, when the second communications device is the network device, the first bit sequence may be determined based on the indication information from the second communications device.

In another implementation, the first bit sequence may be determined by a terminal device. The first communications device being a terminal is used as an example, and the first bit sequence may be determined by the first communications device. Alternatively, when the second communications device is a terminal, the first bit sequence may be determined by the second communications device.

In another implementation, the first bit sequence may be determined based on the preset rule. The preset rule may be associated with a terminal identity and/or a cell identity. For example, when the first communications device is a terminal, the preset rule is associated with an identity of the first communications device and/or a cell identity of the first communications device. When the second communications device is a terminal, the preset rule is associated with an identity of the second communications device and/or a cell identity of the second communications device.

That the terminal identity is an ID1, the cell identity is an ID2, and a length of the first bit sequence is S is used as an example, and the preset rule may include: The first bit sequence may be mod (ID1+ID2, S), where mod() represents a modulo operation, and S is an integer greater than 0.

It should be noted that the length of the first bit sequence may be determined based on one or more of the following information: a preset rule, indication information from the second communications device or the first communications device, or a protocol pre-definition.

As can be learned from the above, the first signal is generated based on the original bit sequence and the first bit sequence. This application provides a plurality of methods for generating the first signal. The following describes the method for generating the first signal in detail.

In an implementation, the first signal may be a signal generated by modulating a second bit sequence. The second bit sequence may be determined based on the first bit sequence and the original bit sequence. It may be understood that the first signal may be a signal generated by performing a same modulation process on the original bit sequence and the first bit sequence. It should be noted that the original bit sequence on which the modulation process is based may be a processed original bit sequence. The first bit sequence on which the modulation process is based may be a processed first bit sequence. The following describes the method for generating the first signal by using Embodiments 1 to 3.

In some embodiments (such as Embodiments 1 and 2), the second bit sequence may be a bit sequence generated by performing baseband data encoding on a third bit sequence. The third bit sequence may be determined based on the first bit sequence and the original bit sequence. It may be understood that the second bit sequence may be generated by performing same baseband data encoding on the original bit sequence and the first bit sequence.

### Embodiment 1

An original bit sequence may be combined with a first bit sequence, and a third bit sequence is generated based on a combined bit sequence. In an implementation, the third bit sequence may include the original bit sequence and the first bit sequence, and the first bit sequence is located in front of the original bit sequence. In another implementation, the original bit sequence may be combined with the first bit sequence, to form a fourth bit sequence. In the fourth bit sequence, the first bit sequence is located in front of the original bit sequence. The third bit sequence may be a bit sequence generated by performing first encoding on the fourth bit sequence. Embodiment 1 is described below with reference to FIG. 16.

FIG. 16 is a schematic flowchart of a communication method according to Embodiment 1 of this application. The method shown in FIG. 16 may be performed by a first communications device. The first communications device may be a network device or a terminal. The method shown in FIG. 16 may include steps S1610 to S1640.

Step S1610: Generate an original bit sequence.

Step S1620: Add a first bit sequence. It may be understood that in step S1620, the original bit sequence may be combined with the first bit sequence, and the first bit sequence is located in front of the original bit sequence.

After the first bit sequence and the original bit sequence are combined, first encoding may be performed, that is, step S1625 is performed. Alternatively, first encoding may not be performed. When the first encoding is not performed, the first bit sequence and the original bit sequence may be combined to generate a third bit sequence. When the first encoding is performed, the first bit sequence and the original bit sequence may be combined, to generate a fourth bit sequence, and a third bit sequence may be formed by performing the first encoding on the fourth bit sequence.

Step S1630: Perform baseband data encoding based on the third bit sequence, to generate a second bit sequence.

Step S1640: Perform signal modulation based on the second bit sequence, to generate a first signal.

### Embodiment 2

A third bit sequence may include a fifth bit sequence and a first bit sequence. The fifth bit sequence may be a bit sequence obtained by performing first encoding on an original bit sequence. Embodiment 2 is described below with reference to FIG. 17.

FIG. 17 is a schematic flowchart of a communication method according to Embodiment 2 of this application. The method shown in FIG. 17 may be performed by a first communications device. The first communications device may be a network device or a terminal. The method shown in FIG. 17 may include steps S1710 to S1750.

Step S1710: Generate an original bit sequence.

Step S1720: Perform first encoding on the original bit sequence, to generate a fifth bit sequence. It may be understood that performing the first encoding on the original bit sequence may improve reliability of original data transmission.

Step S1730: Add a first bit sequence based on the fifth bit sequence, to generate a third bit sequence. The first bit sequence may be in front of the fifth bit sequence.

It may be understood that in the method shown in FIG. 17, the first encoding is not performed on the first bit sequence, so that the processing on the first bit sequence can be simplified and processing overheads of a first communications terminal are reduced. By performing the first encoding on the original bit sequence, reliability and accuracy of original data transmission can be improved.

Step S1740: Perform baseband data encoding based on the third bit sequence, to generate a second bit sequence.

Step S1750: Perform signal modulation based on the second bit sequence, to generate a first signal.

### Embodiment 3

A second bit sequence may include a sixth bit sequence and a seventh bit sequence. The sixth bit sequence may be a bit sequence obtained by performing baseband data encoding on an original bit sequence. The seventh bit sequence may be a bit sequence added in front of the sixth bit sequence, and the seventh bit sequence may be determined based on a first bit sequence. That is, the first bit sequence may be processed by baseband data encoding, and then combined with an original bit sequence processed by baseband data encoding, to generate a second bit sequence. Alternatively, the first bit sequence may be directly combined with an original bit sequence processed by baseband data encoding, to generate a second bit sequence.

In an implementation, the seventh bit sequence may be the first bit sequence. Alternatively, the seventh bit sequence may be a bit sequence obtained by performing baseband data encoding on the first bit sequence.

It should be noted that, when baseband data encoding is performed on the first bit sequence to generate the seventh bit sequence, a baseband data encoding process corresponding to the first bit sequence may be the same as or different from a baseband data encoding process corresponding to the original bit sequence. For example, baseband data encoding schemes may be different. It may be understood that based on the different baseband data encoding schemes, a relatively simple data coding scheme may be selected for the first bit sequence, to reduce calculation by the first communications device and/or the second communications device.

It should be noted that before baseband data encoding is performed on the original bit sequence, first encoding may be performed on the original bit sequence, and baseband data encoding is performed on the original bit sequence already processed by the first encoding. By the first encoding, data transmission reliability may be improved.

Before baseband data encoding is performed on the first bit sequence, the first encoding may be performed on the first bit sequence.

Embodiment 3 is described below with reference to FIG. 18.

FIG. 18 is a schematic flowchart of a communication method according to Embodiment 3 of this application. The method shown in FIG. 18 may be performed by a first communications device. The first communications device may be a network device or a terminal. The method shown in FIG. 18 may include steps S1810 to S1840.

Step S1810: Generate an original bit sequence.

Optionally, the method shown in FIG. 18 may further include step S1815.

Step S1815: Perform first encoding on the original bit sequence.

Step S1820: Perform baseband data encoding on the original bit sequence, to obtain a sixth bit sequence.

It may be understood that in step S1820, the baseband data encoding may be performed on the original bit sequence already processed by the first encoding.

Step S1830: Add a seventh bit sequence based on the sixth bit sequence, to obtain a second bit sequence. The seventh bit sequence is located in front of the sixth bit sequence.

The seventh bit sequence may be generated based on a first bit sequence. In an implementation, the seventh bit sequence may be the first bit sequence. In another implementation, the seventh bit sequence may be generated by performing baseband data encoding on the first bit sequence. In this implementation, the method shown in FIG. 18 may further include step S1835.

Step S1835: Perform baseband data encoding on the first bit sequence, to generate the seventh bit sequence.

As described above, a first signal may be a signal generated by performing a same modulation process on the original bit sequence and the first bit sequence. It is described below with reference to Embodiment 4 that the first signal may be a signal generated by performing different modulation processes on the original bit sequence and the first bit sequence.

### Embodiment 4

A symbol sequence corresponding to an original bit sequence may be a first symbol sequence, a symbol sequence corresponding to a first bit sequence may be a second symbol sequence, and the first symbol sequence and the second symbol sequence may be generated based on different modulation processes. For example, a modulation scheme of the first symbol sequence may be different from a modulation scheme of the second symbol sequence.

It should be noted that the first symbol sequence may include a first symbol, and the second symbol sequence may include a second symbol. A length (for example, a time length) of the first symbol may be the same as or different from a length of the second symbol. For example, a time length of each symbol in the first symbol sequence may be the same as or different from a time length of each symbol in the second symbol sequence. For example, the time length of each symbol in the first symbol sequence may be greater than or equal to the time length of each symbol in the second symbol sequence. Alternatively, the time length of each symbol in the first symbol sequence may be less than or equal to the time length of each symbol in the second symbol sequence. Optionally, the time length of each symbol in the first symbol sequence may be in an integral multiple relationship with the time length of each symbol in the second symbol sequence. For example, Q × the time length of each symbol in the second symbol sequence = the time length of each symbol in the first symbol sequence. Q may be an integer greater than 0. Vice versa, that is, the time length of each symbol in the second symbol sequence may be in an integral multiple relationship with the time length of each symbol in the first symbol sequence.

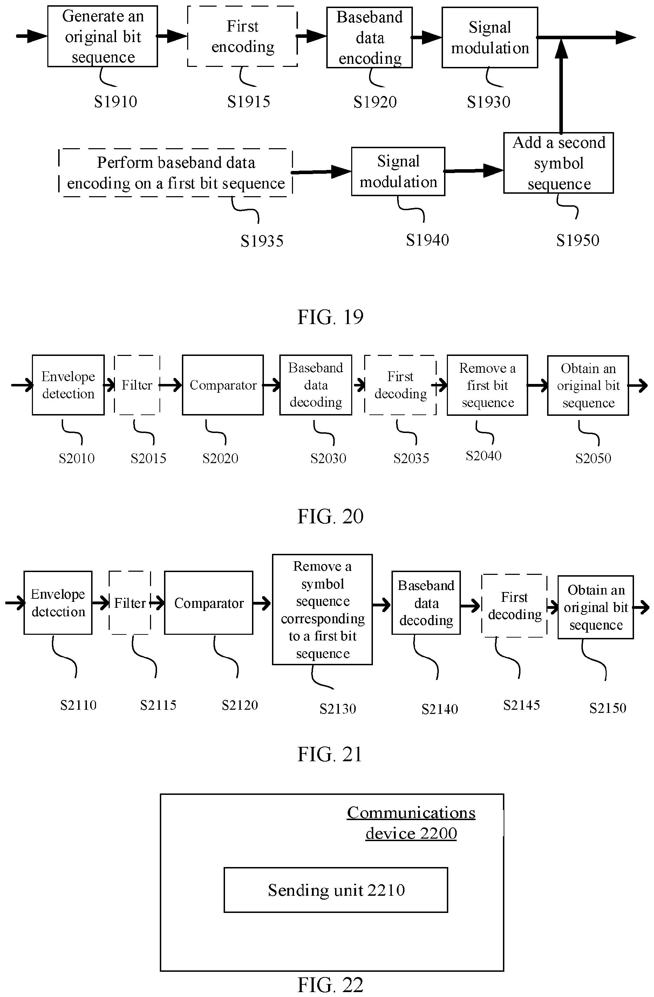

Embodiment 4 is described below with reference to FIG. 19.

FIG. 19 is a schematic flowchart of a communication method according to Embodiment 4 of this application. The method shown in FIG. 19 may be performed by a first communications device. The method shown in FIG. 19 may include steps S1910 to S1940.

Step S1910: Generate an original bit sequence.

The method shown in FIG. 19 may further include step S1915.

Step S1915: Perform first encoding on the original bit sequence.

Step S1920: Perform baseband data encoding on the original bit sequence.

It may be understood that in step S1920, the baseband data encoding may be performed on the original bit sequence already processed by the first encoding.

Step S1930: Perform signal modulation on the original bit sequence already processed by the baseband data encoding, to generate a first symbol sequence.

Step S1940: Perform signal modulation based on a first bit sequence, to generate a second symbol sequence.

A signal modulation process of the first symbol sequence may be different from a signal modulation process of the second symbol sequence. For example, a modulation scheme of the first symbol sequence may be different from a modulation scheme of the second symbol sequence.

Optionally, baseband data encoding and/or first encoding may be performed on the first bit sequence. For example, the method shown in FIG. 19 may further include step S1935.

Step S1935: Perform baseband data encoding on the first bit sequence.

It should be noted that the baseband data encoding may be performed on the first bit sequence already processed by the first encoding, or the baseband data encoding may be directly performed on the first bit sequence.

Step S1950: Add the second symbol sequence, to form a first signal. For example, the second symbol sequence may be added in front of the first symbol sequence.

It should be noted that an order of related processing for the first bit sequence and/or related processing for the original bit sequence are/is not limited in this application. For example, the related processing for the first bit sequence may be performed first, and then the related processing for the original bit sequence may be performed. Alternatively, the related processing for the first bit sequence and the related processing for the original bit sequence may be performed in parallel. The related processing may include one or more of the following processing: first encoding, baseband data encoding, or modulation.

After receiving the first signal, a second communications device may perform processing based on the symbol sequence corresponding to the first bit sequence, to obtain a stable demodulation parameter. For example, the first signal may be subjected to one or more of the following processing processes: envelope detection, a filter, or a comparator. The demodulation parameter may include, for example, a threshold of the comparator. The filter may include, for example, one or more of the following filters: a low-pass filter, a band-pass filter, or a high-pass filter.

The second communications device may accordingly process the first signal based on processing performed by the first communications device on the first bit sequence and on the original bit sequence. For example, the second communications device may perform first decoding. The first decoding may include redundant data decoding and/or CRC decoding. Specific execution of the first decoding may be determined based on the first encoding performed by the first communications device. If the first communications device does not perform the first encoding, the second communications device may not perform the first decoding. When the first encoding includes redundant data encoding, the first decoding may include redundant data decoding. When the first encoding includes CRC encoding, the first decoding may include CRC decoding.

It should be noted that, when the first communications device performs the first encoding on the first bit sequence, the second communications device may not perform the first decoding on the symbol sequence corresponding to the first bit sequence, to reduce an amount of computing of the second communications device and increase computing efficiency.

In an implementation, after obtaining the demodulation parameter, baseband data decoding may be performed on the first signal, and then a bit sequence generated based on the first bit sequence is removed, to obtain the original bit sequence. In some embodiments, this implementation may be used when the symbol sequence corresponding to the first bit sequence is coupled to the symbol sequence corresponding to the original bit sequence. For example, when the first bit sequence is combined with the original bit sequence and then processed by first encoding (for example, CRC encoding is included), a result of the first decoding (such as CRC decoding or a CRC check) corresponding to the first encoding may be related to both the first bit sequence and the original bit sequence, that is, in this case, the symbol sequence corresponding to the first bit sequence is coupled to the symbol sequence corresponding to the original bit sequence.

With reference to FIG. 20, this implementation is described below by using an example in which a demodulation process includes envelope detection and a comparator. FIG. 20 is a schematic flowchart of a communication method according to an embodiment of this application. The method shown in FIG. 20 may be performed by a second communications device. The method shown in FIG. 20 may include steps S2010 to S2050.

Step S2010: The second communications device performs envelope detection on a first signal.

Optionally, the method shown in FIG. 20 may include step S2015.

Step S2015: Pass, through a filter, the first signal processed by envelope detection.

Step S2020: Pass the first signal through a comparator to determine a level. When processing a first symbol in a symbol sequence corresponding to an original symbol sequence, a threshold of the comparator may be a threshold determined based on a symbol sequence corresponding to a first bit sequence.

Step S2030: Perform baseband data decoding on the first signal. The baseband data decoding may correspond to baseband data encoding performed by a first communications device.

Optionally, the method shown in FIG. 20 may include step S2035. Step S2035: Perform first decoding. It may be understood that when the first communications device performs first encoding, the method shown in FIG. 20 may include step S2035.

Step S2040: Remove a bit sequence generated based on the first bit sequence. For example, when a same baseband data encoding process is performed on the first bit sequence and the original bit sequence, a bit sequence obtained by baseband data decoding may include the first bit sequence and the original bit sequence. After the first bit sequence is removed, the original bit sequence may be further obtained.

Step S2050: Obtain the original bit sequence.

In another implementation, the symbol sequence corresponding to the first bit sequence may be removed from the first signal, and then baseband data decoding is performed on the first signal, to obtain the original bit sequence. In some embodiments, this implementation may be used when the symbol sequence corresponding to the first bit sequence is not coupled to the symbol sequence corresponding to the original bit sequence. For example, this implementation may be applied to any one of the following cases:
Case 1: The first communications device does not perform first encoding. It may be understood that in this case, first encoding is performed on neither the original bit sequence nor the first bit sequence, and the symbol sequence corresponding to the first bit sequence may not be coupled to the symbol sequence corresponding to the original bit sequence.

Case 2: First encoding is separately performed on the original bit sequence and the first bit sequence. It may be understood that in this case, first encoding performed on the original bit sequence and first encoding performed on the first bit sequence are independent of each other. That is, the first decoding performed on the first bit sequence does not affect the first decoding performed on the original bit sequence (the first decoding may be, for example, a CRC check).

Case 3: The first encoding is performed on the original bit sequence, but the first encoding is not performed on the first bit sequence.

It should be noted that a length of each symbol of a modulated original bit sequence may be the same as or different from a length of each symbol of a modulated first bit sequence. For example, the length of each symbol of the modulated original bit sequence may be T1, and the length of each symbol of the modulated first bit sequence may be T2. T1 and T2 may be the same or different. T1 is an integer greater than 0, and T2 is an integer greater than 0.

With reference to FIG. 21, this implementation is described below by using an example in which a demodulation process includes envelope detection and a comparator.

FIG. 21 is a schematic flowchart of a communication method according to an embodiment of this application. The method shown in FIG. 21 may be performed by a second communications device. The method shown in FIG. 21 may include steps S2110 to S2150.

Step S2110: The second communications device performs envelope detection on a first signal.

Optionally, the method shown in FIG. 21 may include step S2115. Step S2115: Pass, through a filter, the first signal processed by envelope detection.

Step S2120: Pass the first signal through a comparator to determine a level. A threshold of the comparator may be determined based on a symbol sequence corresponding to a first bit sequence.

Step S2130: Remove the symbol sequence corresponding to the first bit sequence.

The following descriptions are provided by using an example in which a first terminal does not perform first encoding. For example, a length of an original bit sequence may be N1, and a length of the first bit sequence may be N2. A symbol length corresponding to each modulated bit may be T0. It may be understood that in the first signal, the beginning time of a length N2×T0 may correspond to the symbol sequence corresponding to the first bit sequence, and the last time of a length N1×T0 may correspond to the symbol sequence corresponding to the original bit sequence. When an output result of the comparator is digitally processed, the beginning N2×T0 symbols of the output result may be removed, that is, the symbol sequence corresponding to the first bit sequence is removed.

Step S2140: Perform baseband data decoding on the first signal from which the symbol sequence corresponding to the first bit sequence is removed. The baseband data decoding may correspond to baseband data encoding performed by a first communications device.

Optionally, the method shown in FIG. 21 may include step S2145. Step S2145: Perform first decoding. It may be understood that when the first communications device performs first encoding, the method shown in FIG. 21 may include step S2145.

Step S2050: Obtain the original bit sequence.

It may be understood that, before baseband data decoding, the symbol sequence corresponding to the first bit sequence is deleted from the first signal, so that operations by the second communications device for baseband data decoding can be reduced, thereby improving processing efficiency of the second communications device.

The method embodiments of this application are described above in detail with reference to FIG. 1 to FIG. 21. Apparatus embodiments of this application are described below in detail with reference to FIG. 22 to FIG. 24. It should be understood that the descriptions of the method embodiments correspond to descriptions of the apparatus embodiments, and therefore, for parts that are not described in detail, reference may be made to the foregoing method embodiments.

FIG. 22 is a schematic structural diagram of a communications device 2200 according to an embodiment of this application. The communications device 2200 may be a first communications device. The communications device 2200 may include a sending unit 2210.

The sending unit 2210 is configured to send a first signal to a second communications device. The first signal includes a symbol sequence corresponding to an original bit sequence and a symbol sequence corresponding to a first bit sequence, and the symbol sequence corresponding to the first bit sequence is located in front of the symbol sequence corresponding to the original bit sequence.

Optionally, the first signal is a signal generated by modulating a second bit sequence, and the second bit sequence is determined based on the first bit sequence and the original bit sequence.

Optionally, the second bit sequence is a bit sequence generated by performing baseband data encoding on a third bit sequence, and the third bit sequence is determined based on the first bit sequence and the original bit sequence.

Optionally, the third bit sequence includes the original bit sequence and the first bit sequence, and the first bit sequence is located in front of the original bit sequence; or the third bit sequence is a bit sequence generated by performing first encoding on a fourth bit sequence, the fourth bit sequence includes the original bit sequence and the first bit sequence, and the first bit sequence is located in front of the original bit sequence.

Optionally, the third bit sequence includes a fifth bit sequence and the first bit sequence, and the fifth bit sequence is a bit sequence obtained by performing first encoding on the original bit sequence.

Optionally, the second bit sequence includes a sixth bit sequence and a seventh bit sequence, the sixth bit sequence is a bit sequence obtained by performing baseband data encoding on the original bit sequence, the seventh bit sequence is a bit sequence added in front of the sixth bit sequence, and the seventh bit sequence is determined based on the first bit sequence.

Optionally, the seventh bit sequence is the first bit sequence; or the seventh bit sequence is a bit sequence obtained by performing baseband data encoding on the first bit sequence.

Optionally, a baseband data encoding scheme corresponding to the first bit sequence is different from a baseband data encoding scheme corresponding to the original bit sequence.

Optionally, the symbol sequence corresponding to the original bit sequence is a first symbol sequence, the symbol sequence corresponding to the first bit sequence is a second symbol sequence, and the first symbol sequence and the second symbol sequence are generated based on different modulation processes.

Optionally, a modulation scheme corresponding to the first symbol sequence is different from a modulation scheme corresponding to the second symbol sequence.

Optionally, the first symbol sequence includes a first symbol, the second symbol sequence includes a second symbol, and a time length of the first symbol is different from a time length of the second symbol.

Optionally, the first encoding includes redundant data encoding and/or cyclic redundancy check CRC encoding.

Optionally, the first signal is a signal used for backscatter communication or ultra-low-power communication.

Optionally, the first bit sequence is further used to perform one or more of the following operations: performing synchronization processing, identifying the first communications device, or access control.

Optionally, the first bit sequence is a preamble.

Optionally, the first signal is generated through ACK modulation or OOK modulation.

Optionally, the symbol sequence corresponding to the first bit sequence is used to determine a threshold of a comparator, and the comparator is configured to demodulate the first signal.

Optionally, the first bit sequence is determined based on one of the following information: a preset rule, indication information from the second communications device or the first communications device, or a protocol pre-definition.

Optionally, when the first communications device is a terminal, the preset rule is associated with an identity of the first communications device and/or a cell identity of the first communications device; and/or when the second communications device is a terminal, the preset rule is associated with an identity of the second communications device and/or a cell identity of the second communications device.

Optionally, the first bit sequence includes bit 0 and bit 1.

Optionally, the baseband data encoding includes: non-return-to-zero inverted encoding, Manchester encoding, unipolar return-to-zero encoding, differential bi-phase encoding, Miller encoding, differential encoding, or pulse interval encoding.

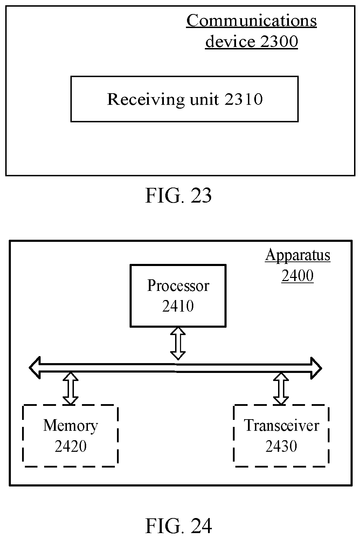

FIG. 23 is a schematic structural diagram of a communications device 2300 according to an embodiment of this application. The communications device 2300 may be a second communications device. The communications device 2300 may include a receiving unit 2310.

The receiving unit 2310 is configured to receive a first signal sent by a first communications device. The first signal includes a symbol sequence corresponding to an original bit sequence and a symbol sequence corresponding to a first bit sequence, and the symbol sequence corresponding to the first bit sequence is located in front of the symbol sequence corresponding to the original bit sequence.

Optionally, the first signal is a signal generated by modulating a second bit sequence, and the second bit sequence is determined based on the first bit sequence and the original bit sequence.

Optionally, the second bit sequence is a bit sequence generated by performing baseband data encoding on a third bit sequence, and the third bit sequence is determined based on the first bit sequence and the original bit sequence.

Optionally, the third bit sequence includes the original bit sequence and the first bit sequence, and the first bit sequence is located in front of the original bit sequence; or the third bit sequence is a bit sequence generated by performing first encoding on a fourth bit sequence, the fourth bit sequence includes the original bit sequence and the first bit sequence, and the first bit sequence is located in front of the original bit sequence.

Optionally, the third bit sequence includes a fifth bit sequence and the first bit sequence, and the fifth bit sequence is a bit sequence obtained by performing first encoding on the original bit sequence.

Optionally, the second bit sequence includes a sixth bit sequence and a seventh bit sequence, the sixth bit sequence is a bit sequence obtained by performing baseband data encoding on the original bit sequence, the seventh bit sequence is a bit sequence added in front of the sixth bit sequence, and the seventh bit sequence is determined based on the first bit sequence.

Optionally, the seventh bit sequence is the first bit sequence; or the seventh bit sequence is a bit sequence obtained by performing baseband data encoding on the first bit sequence.

Optionally, a baseband data encoding scheme corresponding to the first bit sequence is different from a baseband data encoding scheme corresponding to the original bit sequence.

Optionally, the symbol sequence corresponding to the original bit sequence is a first symbol sequence, the symbol sequence corresponding to the first bit sequence is a second symbol sequence, and the first symbol sequence and the second symbol sequence are generated based on different modulation processes.

Optionally, a modulation scheme corresponding to the first symbol sequence is different from a modulation scheme corresponding to the second symbol sequence.

Optionally, the first symbol sequence includes a first symbol, the second symbol sequence includes a second symbol, and a time length of the first symbol is different from a time length of the second symbol.

Optionally, the first encoding includes redundant data encoding and/or cyclic redundancy check CRC encoding.

Optionally, the first signal is a signal used for backscatter communication or ultra-low-power communication.

Optionally, the first bit sequence is further used to perform one or more of the following operations: performing synchronization processing, identifying the first communications device, or access control.

Optionally, the first bit sequence is a preamble.

Optionally, the first signal is generated through ACK modulation or OOK modulation.

Optionally, the symbol sequence corresponding to the first bit sequence is used to determine a threshold of a comparator, and the comparator is configured to demodulate the first signal.

Optionally, the first bit sequence is determined based on one of the following information: a preset rule, indication information from the second communications device or the first communications device, or a protocol pre-definition.

Optionally, when the first communications device is a terminal, the preset rule is associated with an identity of the first communications device and/or a cell identity of the first communications device; and/or when the second communications device is a terminal, the preset rule is associated with an identity of the second communications device and/or a cell identity of the second communications device.

Optionally, the first bit sequence includes bit 0 and bit 1.

Optionally, the baseband data encoding includes: non-return-to-zero inverted encoding, Manchester encoding, unipolar return-to-zero encoding, differential bi-phase encoding, Miller encoding, differential encoding, or pulse interval encoding.

Optionally, the communications device 2300 further includes: a deletion unit, configured to: before baseband data decoding is performed on the first signal, delete, from the first signal, the symbol sequence corresponding to the first bit sequence.

FIG. 24 is a schematic structural diagram of a communications apparatus according to an embodiment of this application. Dashed lines in FIG. 24 indicate that a unit or module is optional. The apparatus 2400 may be configured to implement the methods described in the foregoing method embodiments. The apparatus 2400 may be a chip or a peer device (such as a terminal device or a network device).

The apparatus 2400 may include one or more processors 2410. The processor 2410 may support the apparatus 2400 in implementing the methods described in the foregoing method embodiments. The processor 2410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2400 may further include one or more memories 2420. The memory 2420 stores a program that may be executed by the processor 2410 to cause the processor 2410 to perform the methods described in the foregoing method embodiments. The memory 2420 may be independent of the processor 2410 or may be integrated into the processor 2410.

The apparatus 2400 may further include a transceiver 2430. The processor 2410 may communicate with another device or chip through the transceiver 2430. For example, the processor 2410 may transmit data to and receive data from another device or chip through the transceiver 2430.

An embodiment of this application further provides a computer-readable storage medium for storing a program. The computer-readable storage medium may be applied to the terminal or the network device provided in the embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in the embodiments of this application, and the program causes a computer to perform the methods performed by the terminal or the network device in various embodiments of this application.

An embodiment of this application further provides a computer program. The computer program may be applied to the terminal or the network device provided in the embodiments of this application, and the computer program causes a computer to perform the methods performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In the embodiments of this application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In the embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a first communications device, a first signal to a second communications device,
wherein the first signal comprises a symbol sequence corresponding to an original bit sequence and a symbol sequence corresponding to a first bit sequence, and the symbol sequence corresponding to the first bit sequence is located in front of the symbol sequence corresponding to the original bit sequence.

2. The method according to claim 1, wherein the first signal is a signal generated by modulating a second bit sequence, and the second bit sequence is determined based on the first bit sequence and the original bit sequence.

3. The method according to claim 2, wherein the second bit sequence is a bit sequence generated by performing baseband data encoding on a third bit sequence, and the third bit sequence is determined based on the first bit sequence and the original bit sequence.

4. The method according to claim 3, wherein
the third bit sequence comprises the original bit sequence and the first bit sequence, and the first bit sequence is located in front of the original bit sequence; or
the third bit sequence is a bit sequence generated by performing first encoding on a fourth bit sequence, the fourth bit sequence comprises the original bit sequence and the first bit sequence, and the first bit sequence is located in front of the original bit sequence.

5. The method according to claim 3, wherein the third bit sequence comprises a fifth bit sequence and the first bit sequence, and the fifth bit sequence is a bit sequence obtained by performing first encoding on the original bit sequence.

6. The method according to claim 2, wherein the second bit sequence comprises a sixth bit sequence and a seventh bit sequence, the sixth bit sequence is a bit sequence obtained by performing baseband data encoding on the original bit sequence, the seventh bit sequence is a bit sequence added in front of the sixth bit sequence, and the seventh bit sequence is determined based on the first bit sequence.

7. The method according to claim 6, wherein the seventh bit sequence is the first bit sequence; or the seventh bit sequence is a bit sequence obtained by performing baseband data encoding on the first bit sequence.

8. The method according to claim 7, wherein a baseband data encoding scheme corresponding to the first bit sequence is different from a baseband data encoding scheme corresponding to the original bit sequence.

9. The method according to claim 1, wherein the symbol sequence corresponding to the original bit sequence is a first symbol sequence, the symbol sequence corresponding to the first bit sequence is a second symbol sequence, and the first symbol sequence and the second symbol sequence are generated based on different modulation processes.

10. The method according to claim 9, wherein a modulation scheme corresponding to the first symbol sequence is different from a modulation scheme corresponding to the second symbol sequence.

11. The method according to claim 10, wherein the first symbol sequence comprises a first symbol, the second symbol sequence comprises a second symbol, and a time length of the first symbol is different from a time length of the second symbol.

12. The method according to claim 4 or 5, wherein the first encoding comprises redundant data encoding and/or cyclic redundancy check CRC encoding.

13. The method according to any one of claims 1 to 12, wherein the first signal is a signal used for backscatter communication or ultra-low-power communication.

14. The method according to any one of claims 1 to 13, wherein the first bit sequence is further used to perform one or more of the following operations: performing synchronization processing, identifying the first communications device, or access control.

15. The method according to any one of claims 1 to 14, wherein the first bit sequence is a preamble.

16. The method according to any one of claims 1 to 15, wherein the first signal is generated through ACK modulation or OOK modulation.

17. The method according to any one of claims 1 to 16, wherein the symbol sequence corresponding to the first bit sequence is used to determine a threshold of a comparator, and the comparator is configured to demodulate the first signal.

18. The method according to any one of claims 1 to 17, wherein the first bit sequence is determined based on one of the following information: a preset rule, indication information from the second communications device or the first communications device, or a protocol pre-definition.

19. The method according to claim 18, wherein
when the first communications device is a terminal, the preset rule is associated with an identity of the first communications device and/or a cell identity of the first communications device; and/or
when the second communications device is a terminal, the preset rule is associated with an identity of the second communications device and/or a cell identity of the second communications device.

20. The method according to any one of claims 1 to 19, wherein the first bit sequence comprises bit 0 and bit 1.

21. The method according to any one of claims 3 to 8, wherein the baseband data encoding comprises: non-return-to-zero inverted encoding, Manchester encoding, unipolar return-to-zero encoding, differential bi-phase encoding, Miller encoding, differential encoding, or pulse interval encoding.

22. A communication method, wherein the method comprises:
receiving, by a second communications device, a first signal sent by a first communications device, wherein
the first signal comprises a symbol sequence corresponding to an original bit sequence and a symbol sequence corresponding to a first bit sequence, and the symbol sequence corresponding to the first bit sequence is located in front of the symbol sequence corresponding to the original bit sequence.

23. The method according to claim 22, wherein the first signal is a signal generated by modulating a second bit sequence, and the second bit sequence is determined based on the first bit sequence and the original bit sequence.

24. The method according to claim 23, wherein the second bit sequence is a bit sequence generated by performing baseband data encoding on a third bit sequence, and the third bit sequence is determined based on the first bit sequence and the original bit sequence.

25. The method according to claim 24, wherein
the third bit sequence comprises the original bit sequence and the first bit sequence, and the first bit sequence is located in front of the original bit sequence; or
the third bit sequence is a bit sequence generated by performing first encoding on a fourth bit sequence, the fourth bit sequence comprises the original bit sequence and the first bit sequence, and the first bit sequence is located in front of the original bit sequence.

26. The method according to claim 24, wherein the third bit sequence comprises a fifth bit sequence and the first bit sequence, and the fifth bit sequence is a bit sequence obtained by performing first encoding on the original bit sequence.

27. The method according to claim 23, wherein the second bit sequence comprises a sixth bit sequence and a seventh bit sequence, the sixth bit sequence is a bit sequence obtained by performing baseband data encoding on the original bit sequence, the seventh bit sequence is a bit sequence added in front of the sixth bit sequence, and the seventh bit sequence is determined based on the first bit sequence.

28. The method according to claim 27, wherein the seventh bit sequence is the first bit sequence; or the seventh bit sequence is a bit sequence obtained by performing baseband data encoding on the first bit sequence.

29. The method according to claim 28, wherein a baseband data encoding scheme corresponding to the first bit sequence is different from a baseband data encoding scheme corresponding to the original bit sequence.

30. The method according to claim 22, wherein the symbol sequence corresponding to the original bit sequence is a first symbol sequence, the symbol sequence corresponding to the first bit sequence is a second symbol sequence, and the first symbol sequence and the second symbol sequence are generated based on different modulation processes.

31. The method according to claim 30, wherein a modulation scheme corresponding to the first symbol sequence is different from a modulation scheme corresponding to the second symbol sequence.

32. The method according to claim 31, wherein the first symbol sequence comprises a first symbol, the second symbol sequence comprises a second symbol, and a time length of the first symbol is different from a time length of the second symbol.

33. The method according to claim 25 or 26, wherein the first encoding comprises redundant data encoding and/or cyclic redundancy check CRC encoding.

34. The method according to any one of claims 22 to 33, wherein the first signal is a signal used for backscatter communication or ultra-low-power communication.

35. The method according to any one of claims 22 to 34, wherein the first bit sequence is further used to perform one or more of the following operations: performing synchronization processing, identifying the first communications device, or access control.

36. The method according to any one of claims 22 to 35, wherein the first bit sequence is a preamble.

37. The method according to any one of claims 22 to 36, wherein the first signal is generated through ACK modulation or OOK modulation.

38. The method according to any one of claims 22 to 37, wherein the symbol sequence corresponding to the first bit sequence is used to determine a threshold of a comparator, and the comparator is configured to demodulate the first signal.

39. The method according to any one of claims 22 to 38, wherein the first bit sequence is determined based on one of the following information: a preset rule, indication information from the second communications device or the first communications device, or a protocol pre-definition.

40. The method according to claim 39, wherein
when the first communications device is a terminal, the preset rule is associated with an identity of the first communications device and/or a cell identity of the first communications device; and/or
when the second communications device is a terminal, the preset rule is associated with an identity of the second communications device and/or a cell identity of the second communications device.

41. The method according to any one of claims 22 to 40, wherein the first bit sequence comprises bit 0 and bit 1.

42. The method according to any one of claims 24 to 29, wherein the baseband data encoding comprises: non-return-to-zero inverted encoding, Manchester encoding, unipolar return-to-zero encoding, differential bi-phase encoding, Miller encoding, differential encoding, or pulse interval encoding.

43. The method according to any one of claims 22 to 42, wherein the method further comprises:
before baseband data decoding is performed on the first signal, deleting, by the second communications device from the first signal, the symbol sequence corresponding to the first bit sequence.

44. A communications device, wherein the communications device is a first communications device, and the communications device comprises:
a sending unit, configured to send a first signal to a second communications device, wherein
the first signal comprises a symbol sequence corresponding to an original bit sequence and a symbol sequence corresponding to a first bit sequence, and the symbol sequence corresponding to the first bit sequence is located in front of the symbol sequence corresponding to the original bit sequence.

45. The communications device according to claim 44, wherein the first signal is a signal generated by modulating a second bit sequence, and the second bit sequence is determined based on the first bit sequence and the original bit sequence.

46. The communications device according to claim 45, wherein the second bit sequence is a bit sequence generated by performing baseband data encoding on a third bit sequence, and the third bit sequence is determined based on the first bit sequence and the original bit sequence.

47. The communications device according to claim 46, wherein
the third bit sequence comprises the original bit sequence and the first bit sequence, and the first bit sequence is located in front of the original bit sequence; or
the third bit sequence is a bit sequence generated by performing first encoding on a fourth bit sequence, the fourth bit sequence comprises the original bit sequence and the first bit sequence, and the first bit sequence is located in front of the original bit sequence.

48. The communications device according to claim 46, wherein the third bit sequence comprises a fifth bit sequence and the first bit sequence, and the fifth bit sequence is a bit sequence obtained by performing first encoding on the original bit sequence.

49. The communications device according to claim 45, wherein the second bit sequence comprises a sixth bit sequence and a seventh bit sequence, the sixth bit sequence is a bit sequence obtained by performing baseband data encoding on the original bit sequence, the seventh bit sequence is a bit sequence added in front of the sixth bit sequence, and the seventh bit sequence is determined based on the first bit sequence.

50. The communications device according to claim 49, wherein the seventh bit sequence is the first bit sequence; or the seventh bit sequence is a bit sequence obtained by performing baseband data encoding on the first bit sequence.

51. The communications device according to claim 50, wherein a baseband data encoding scheme corresponding to the first bit sequence is different from a baseband data encoding scheme corresponding to the original bit sequence.

52. The communications device according to claim 44, wherein the symbol sequence corresponding to the original bit sequence is a first symbol sequence, the symbol sequence corresponding to the first bit sequence is a second symbol sequence, and the first symbol sequence and the second symbol sequence are generated based on different modulation processes.

53. The communications device according to claim 52, wherein a modulation scheme corresponding to the first symbol sequence is different from a modulation scheme corresponding to the second symbol sequence.

54. The communications device according to claim 53, wherein the first symbol sequence comprises a first symbol, the second symbol sequence comprises a second symbol, and a time length of the first symbol is different from a time length of the second symbol.

55. The communications device according to claim 47 or 48, wherein the first encoding comprises redundant data encoding and/or cyclic redundancy check CRC encoding.

56. The communications device according to any one of claims 44 to 55, wherein the first signal is a signal used for backscatter communication or ultra-low-power communication.

57. The communications device according to any one of claims 44 to 56, wherein the first bit sequence is further used to perform one or more of the following operations: performing synchronization processing, identifying the first communications device, or access control.

58. The communications device according to any one of claims 44 to 57, wherein the first bit sequence is a preamble.

59. The communications device according to any one of claims 44 to 58, wherein the first signal is generated through ACK modulation or OOK modulation.

60. The communications device according to any one of claims 44 to 59, wherein the symbol sequence corresponding to the first bit sequence is used to determine a threshold of a comparator, and the comparator is configured to demodulate the first signal.

61. The communications device according to any one of claims 44 to 60, wherein the first bit sequence is determined based on one of the following information: a preset rule, indication information from the second communications device or the first communications device, or a protocol pre-definition.

62. The communications device according to claim 61, wherein
when the first communications device is a terminal, the preset rule is associated with an identity of the first communications device and/or a cell identity of the first communications device; and/or
when the second communications device is a terminal, the preset rule is associated with an identity of the second communications device and/or a cell identity of the second communications device.

63. The communications device according to any one of claims 44 to 62, wherein the first bit sequence comprises bit 0 and bit 1.

64. The communications device according to any one of claims 46 to 51, wherein the baseband data encoding comprises: non-return-to-zero inverted encoding, Manchester encoding, unipolar return-to-zero encoding, differential bi-phase encoding, Miller encoding, differential encoding, or pulse interval encoding.

65. A communications device, wherein the communications device is a second communications device, and the communications device comprises:
a receiving unit, configured to receive a first signal sent by a first communications device, wherein
the first signal comprises a symbol sequence corresponding to an original bit sequence and a symbol sequence corresponding to a first bit sequence, and the symbol sequence corresponding to the first bit sequence is located in front of the symbol sequence corresponding to the original bit sequence.

66. The communications device according to claim 65, wherein the first signal is a signal generated by modulating a second bit sequence, and the second bit sequence is determined based on the first bit sequence and the original bit sequence.

67. The communications device according to claim 66, wherein the second bit sequence is a bit sequence generated by performing baseband data encoding on a third bit sequence, and the third bit sequence is determined based on the first bit sequence and the original bit sequence.

68. The communications device according to claim 67, wherein
the third bit sequence comprises the original bit sequence and the first bit sequence, and the first bit sequence is located in front of the original bit sequence; or
the third bit sequence is a bit sequence generated by performing first encoding on a fourth bit sequence, the fourth bit sequence comprises the original bit sequence and the first bit sequence, and the first bit sequence is located in front of the original bit sequence.

69. The communications device according to claim 67, wherein the third bit sequence comprises a fifth bit sequence and the first bit sequence, and the fifth bit sequence is a bit sequence obtained by performing first encoding on the original bit sequence.

70. The communications device according to claim 66, wherein the second bit sequence comprises a sixth bit sequence and a seventh bit sequence, the sixth bit sequence is a bit sequence obtained by performing baseband data encoding on the original bit sequence, the seventh bit sequence is a bit sequence added in front of the sixth bit sequence, and the seventh bit sequence is determined based on the first bit sequence.

71. The communications device according to claim 70, wherein the seventh bit sequence is the first bit sequence; or the seventh bit sequence is a bit sequence obtained by performing baseband data encoding on the first bit sequence.

72. The communications device according to claim 71, wherein a baseband data encoding scheme corresponding to the first bit sequence is different from a baseband data encoding scheme corresponding to the original bit sequence.

73. The communications device according to claim 65, wherein the symbol sequence corresponding to the original bit sequence is a first symbol sequence, the symbol sequence corresponding to the first bit sequence is a second symbol sequence, and the first symbol sequence and the second symbol sequence are generated based on different modulation processes.

74. The communications device according to claim 73, wherein a modulation scheme corresponding to the first symbol sequence is different from a modulation scheme corresponding to the second symbol sequence.

75. The communications device according to claim 74, wherein the first symbol sequence comprises a first symbol, the second symbol sequence comprises a second symbol, and a time length of the first symbol is different from a time length of the second symbol.

76. The communications device according to claim 68 or 69, wherein the first encoding comprises redundant data encoding and/or cyclic redundancy check CRC encoding.

77. The communications device according to any one of claims 65 to 76, wherein the first signal is a signal used for backscatter communication or ultra-low-power communication.

78. The communications device according to any one of claims 65 to 77, wherein the first bit sequence is further used to perform one or more of the following operations: performing synchronization processing, identifying the first communications device, or access control.

79. The communications device according to any one of claims 65 to 78, wherein the first bit sequence is a preamble.

80. The communications device according to any one of claims 65 to 79, wherein the first signal is generated through ACK modulation or OOK modulation.

81. The communications device according to any one of claims 65 to 80, wherein the symbol sequence corresponding to the first bit sequence is used to determine a threshold of a comparator, and the comparator is configured to demodulate the first signal.

82. The communications device according to any one of claims 65 to 81, wherein the first bit sequence is determined based on one of the following information: a preset rule, indication information from the second communications device or the first communications device, or a protocol pre-definition.

83. The communications device according to claim 82, wherein
when the first communications device is a terminal, the preset rule is associated with an identity of the first communications device and/or a cell identity of the first communications device; and/or
when the second communications device is a terminal, the preset rule is associated with an identity of the second communications device and/or a cell identity of the second communications device.

84. The communications device according to any one of claims 65 to 83, wherein the first bit sequence comprises bit 0 and bit 1.

85. The communications device according to any one of claims 67 to 72, wherein the baseband data encoding comprises: non-return-to-zero inverted encoding, Manchester encoding, unipolar return-to-zero encoding, differential bi-phase encoding, Miller encoding, differential encoding, or pulse interval encoding.

86. The communications device according to any one of claims 65 to 85, wherein the communications device further comprises:
a deletion unit, configured to: before baseband data decoding is performed on the first signal, delete, from the first signal, the symbol sequence corresponding to the first bit sequence.

87. A communications device, comprising a memory, a processor, and a communications interface, wherein the memory is configured to store a program, and the processor is configured to invoke the program in the memory to perform the method according to any one of claims 1 to 43.

88. An apparatus, comprising a processor, configured to invoke a program from a memory to perform the method according to any one of claims 1 to 43.

89. A chip, comprising a processor, configured to invoke a program from a memory to cause a device on which the chip is installed to perform the method according to any one of claims 1 to 43.

90. A computer-readable storage medium, wherein the computer-readable storage medium stores a program, and the program causes a computer to perform the method according to any one of claims 1 to 43.

91. A computer program product, comprising a program that causes a computer to perform the method according to any one of claims 1 to 43.

92. A computer program, wherein the computer program causes a computer to perform the method according to any one of claims 1 to 43.
